# EUROPÄISCHE PATENTSCHRIFT

(11) **EP 4 148 515 B1**
(45) Veröffentlichungstag und Bekanntmachung des Hinweises auf die Patenterteilung: **22.11.2023**
(21) Anmeldenummer: 21196271.7
(22) Anmeldetag: 13.09.2021
(51) Int. Cl.: G05B 19/404, G05B 19/402, B23B 41/16

(54) **VERFAHREN ZUR DYNAMISCHEN KOMPENSATION VON WINKELFEHLERN BEIM BETREIBEN EINER WERKZEUGMASCHINE UND WERKZEUGMASCHINE, DIE MIT EINEM DERARTIGEN VERFAHREN BETREIBBAR IST**
METHOD FOR THE DYNAMIC COMPENSATION OF ANGULAR ERRORS DURING THE OPERATION OF A MACHINE TOOL, AND MACHINE TOOL OPERABLE BY SUCH A METHOD
PROCEDE DE COMPENSATION DYNAMIQUE DES ERREURS ANGULAIRES PENDANT LE FONCTIONNEMENT D'UNE MACHINE-OUTIL, ET MACHINE-OUTIL POUVANT ETRE MISE EN OEUVRE PAR UN TEL PROCEDE

(43) Veröffentlichungstag der Anmeldung: 15.03.2023
(73) Patentinhaber: Schwäbische Werkzeugmaschinen GmbH, 78713 Schramberg-Waldmössingen (DE)
(72) Erfinder: Weber, Stefan, 78662 Bösingen (DE)
(74) Vertreter: Schorr, Peter Karl

(56) Entgegenhaltungen:
- DE-A1-102017 121 272
- US-A- 4 310 269

## Beschreibung

Die Erfindung betrifft ein Verfahren zur dynamischen Kompensation von Winkelfehlern beim Betreiben einer Werkzeugmaschine sowie eine Werkzeugmaschine, auf der ein derartiges Verfahren ausführbar ist.

Aus dem Stand der Technik ist bekannt, dass beim Betreiben einer Werkzeugmaschine, insbesondere beim Ausfahren eines Werkzeugs aus einem gerade bearbeiteten Werkstück, Winkelfehler auftreten können. Diese können ursächlich für Riefen in den Bohrungen sein, welche zu einer Verschlechterung der Arbeitsqualität bei der Bearbeitung des Werkstücks führen.

Ursache hierfür ist, dass eine Kraft, die entlang einer in einer horizontalen Ebene verlaufenden Z-Achse wirkt, beim Beschleunigen oder Bearbeiten eines Werkstückst nicht verbindungsfrei vom Maschinenrahmen aufgenommen werden kann. Hierzu kommt es zu einem Winkelfehler in vertikaler Richtung.

Ein Feinbearbeitungsmodul für eine Werkzeugmaschine ist bekannt aus DE 10 2017 121 272 A1, das einen Linearantrieb zum Einfahren und Ausfahren entlang einer Bearbeitungsrichtung umfasst.

Aufgabe der Erfindung ist, ein Verfahren zur dynamischen Kompensation von Winkelfehlern beim Betreiben einer Werkzeugmaschine sowie eine Werkzeugmaschine, die mit einem derartigen Verfahren betreibbar ist, vorzuschlagen, bei der die Qualität eines zu bearbeitenden Werkstücks verbessert ist.

Diese Aufgabe wird gelöst durch ein Verfahren zur dynamischen Kompensation von Winkelsfehlern beim Betreiben einer Werkzeugmaschine, die mindestens eine Aufnahme für mindestens ein Werkstück, in der oder an der ein Werkstück festlegbar ist, die mindestens eine Werkzeugaufnahme, in der oder an der ein Werkzeug, insbesondere ein Bohrer, festgelegt und durch einen Drehantrieb der Werkzeugaufnahme drehend antreibbar ist, die mindestens einen Horizontalantrieb, durch den die Werkzeugaufnahmen zum Bearbeiten des Werkstücks zumindest in einer horizontalen Ebene der Werkzeugmaschine verfahrbar ist, die mindestens einen Vertikalantrieb, durch den die Werkzeugaufnahme in vertikaler Richtung der Werkzeugmaschine verfahrbar ist und die mindestens eine Steuereinheit umfasst, der Drehantrieb, Horizontalantrieb und Vertikalantrieb funktional zugeordnet sind, mit den Schritten:
a. Einfahren des mindestens einen drehend angetrieben Werkzeugs zum Bearbeiten des Werkstücks in das Werkstück entlang einer in der oder schräg zur horizontalen Ebene verlaufenden Einfahrrichtung;
b. Ausfahren des drehend angetriebenen Werkzeugs aus dem Werkstück entlang einer der Einfahrrichtung entgegengesetzten Ausfahrrichtung und Erfassen einer IST-Position der Werkzeugaufnahme in vertikaler Richtung und eines Kraft- und/oder Beschleunigungsvorsteuerungs-IST-Werts des Werkzeugs bezüglich einer in der horizontalen Ebene verlaufenden Z-Achse;
c. Ermitteln eines Winkelfehlers des Werkzeugs in Abhängigkeit des Kraft- und/oder Beschleunigungsvorsteuerungs-IST-Werts des Werkzeugs bezüglich der in der horizontalen Ebene verlaufenden Z-Achse;
d. Ermitteln eines Ausgleichswerts der Werkzeugaufnahme in vertikaler Richtung zum Ausgleich des ermittelten Winkelfehlers und Überführen der Werkzeugaufnahme von der IST-Position um den ermittelten Ausgleichswert auf eine SOLL-Position.

Dadurch, dass ein Winkelfehler des Werkzeugs in Abhängigkeit des Kraft- und/oder Beschleunigungsvorsteuerungs-IST-Werts des Werkzeugs bezüglich der in der horizontalen Ebene verlaufenden Z-Achse ermittelbar ist und hieraus ein Ausgleichswert ermittelbar und die Werkzeugaufnahme von der IST-Position um den ermittelten Ausgleichswert auf eine SOLL-Position überführbar ist, kann der Winkelfehler durch Bewegen der Werkzeugaufnahme ausgeglichen werden. Hierdurch ist ein Beschädigen des durch das Werkzeug bearbeitenden Werkstücks, insbesondere die Gefahr eines Entstehens von so genannten Riefen, reduziert.

Der ermittelte Winkelfehler des Werkzeugs kann in Abhängigkeit des Kraftvorsteuerungs-IST-Werts des Werkzeugs und/oder des Beschleunigungsvorsteuerungs-IST-Werts des Werkzeugs, ermittelt werden.

Hierdurch ist die Verbindung des Werkzeugs bezüglich des Maschinenrahmens ermittelbar.

Unter einem Winkelfehler wird ein Abweichen der Längsachse des Werkzeugs von der Z-Achse in der horizontalen Ebene verstanden.

Um eine Bearbeitung des Werkstücks und ein Durchlaufen des Verfahrens in Echt-Zeit gewährleisten zu können, erweist es sich als vorteilhaft, wenn die Steuereinheit mindestens eine Speichereinheit umfasst, in der mindestens eine Tabelle, in der eine Mehrzahl von Tabellenwerten hinterlegbar sind, und/oder ein Rechenmodell, durch das die Tabellenwerte berechenbar sind, hinterlegt, hinterlegbar und abrufbar ist, wobei in der Tabelle bzw. durch das Rechenmodell einem Kraft- und/oder Beschleunigungsvorsteuerungs-IST-Wert des Werkzeugs in Richtung der in der horizontalen Ebene verlaufenden Z-Achse ein Winkelfehler und/oder ein Ausgleichswert der Werkzeugaufnahme in vertikaler Richtung zugeordnet ist.

Durch das Hinterlegen von Kraft- und/oder Beschleunigungsvorsteuerungs-IST-Werten des Werkzeugs und von Ausgleichswerten der Werkzeugaufnahme kann ein Winkelfehler oder ein Ausgleichswert schnell und einfach erfasst werden. Durch das Vorhalten einer Mehrzahl von Tabellenwerten ist solchenfalls keine Berechnung notwendig, wodurch das Verfahren, bzw. die einzelnen Verfahrensschritte schneller durchführbar sind.

Wenn in der Speichereinheit ein Rechenmodell hinterlegbar ist, kann auf das Vorhalten der Mehrzahl von Tabellenwerten verzichtet werden und Winkelfehler und/oder Ausgleichswert situationsabhängig ermittelt werden. Hierdurch muss die Steuereinheit nicht erst durch das Erstellen und Vorhalten einer Mehrzahl von Tabellenwerten trainiert werden, sondern ist sofort einsetzbar.

Darüber hinaus ist eine Kombination von beiden Möglichkeiten bei einer Ausführungsform des Verfahrens vorgesehen, so dass durch das Rechenmodell die Mehrzahl von Tabellenwerten berechnet und in der Tabelle hinterlegt werden. Hierdurch kann auf bereits berechnete Tabellenwerte zurückgegriffen werden, ohne diese erneut berechnen zu müssen, wodurch ein Ansteuern der Werkzeugaufnahme zum Überführen in vertikaler Richtung beschleunigt realisierbar ist.

Bei einer Weiterbildung des Verfahrens ist vorgesehen, dass der Ausgleichswert eine Korrekturkurve oder ein Korrekturdatum der Werkzeugaufnahme in vertikaler Richtung zum Ausgleich des ermittelten Winkelfehlers umfasst.

Wenn der Ausgleichswert eine Korrekturkurve umfasst, kann ein Bewegen des Werkzeugs entlang der Z-Achse unmittelbar mit einem Bewegen der Werkzeugaufnahme in vertikaler Richtung gekoppelt werden.

Wenn der Ausgleichswert ein Korrekturdatum der Werkzeugaufnahme in vertikaler Richtung umfasst, ist ein schrittweises Berechnen des Ausgleichswerts, insbesondere in Abhängigkeit der Position des Werkzeugs, ermöglicht.

Der Kraft- und/oder Beschleunigungsvorsteuerungs-IST-Wert des Werkzeugs lässt sich einfach und kostengünstig erfassen, wenn der Kraft- und/oder Beschleunigungsvorsteuerungs-IST-Wert des Werkzeugs in Richtung der in der horizontalen Ebene verlaufenden Z-Achse durch die Steuereinheit aus Daten des Drehantriebs und/oder durch ein Sensormittel erfassbar ist.

Wenn der Kraft- und/oder Beschleunigungsvorsteuerungs-IST-Wert des Werkzeugs durch die Steuereinheit aus Daten des Drehantriebs erfassbar ist, ist die Werkzeugmaschine kompakt ausbaubar, insbesondere müssen keine zusätzlichen Sensoren verbaut werden. Wenn der Kraft- und/oder Beschleunigungsvorsteuerungs-IST-Wert durch ein Sensormittel erfassbar ist, kann die Genauigkeit der erfassten Daten gesteigert sein.

Darüber hinaus können Kombinationen aus Erfassen durch die Steuereinheit und aus Erfassen durch das Sensormittel bei Ausführungsformen des Verfahrens vorgesehen sein.

Darüber hinaus lässt sich das Verfahren einfach und kostengünstig realisieren, wenn die IST-Position der Werkzeugaufnahme in vertikaler Richtung durch die Steuereinheit aus Daten des Vertikalantriebs und/oder durch ein Sensormittel erfassbar ist.

Ergänzend oder alternativ zu vorgenannten Ausführungsbeispielen kann bei einer Weiterbildung des Verfahrens vorgesehen sein, dass das Ermitteln eines Winkelfehlers des Werkzeugs in Abhängigkeit des Kraft- und/oder Beschleunigungsvorsteuerungs-IST-Werts des Werkzeugs bezüglich der in der horizontalen Ebene verlaufenden Z-Achse durch das Rechenmodell oder durch das Sensormittel erfolgt.

Solchenfalls kann der Winkelfehler in Abhängigkeit der Kraft- und/oder Beschleunigungsvorsteuerungs-IST-Werts des Werkzeugs durch das Rechenmodell berechnet werden oder unmittelbar durch das Sensormittel bestimmt werden. Wie zuvor beschrieben, kann dem Winkelfehler auch in der Tabelle der Speichereinheit ein Kraft- und/oder Beschleunigungsvorsteuerungs-IST-Wert des Werkzeugs zugeordnet sein.

Um die Qualität zur dynamischen Kompensation von Winkelfehlern beim Betreiben einer Werkzeugmaschine weiter zu verbessern, erweist es sich als vorteilhaft, wenn das Verfahren ein Erfassen einer IST-Position des Werkzeugs in der horizontalen Ebene umfasst.

Die dynamische Kompensation von Winkelfehlern beim Betreiben der Werkzeugmaschine lässt sich bei einer Weiterbildung letztgenannter Ausführungsform weiter verbessern, wenn das Ermitteln des Ausgleichswerts der Werkzeugaufnahme in vertikaler Richtung zusätzlich in Abhängigkeit der erfassten IST-Position des Werkzeugs in der horizontalen Ebene erfolgt.

Grundsätzlich ist es denkbar, dass die Werkzeugmaschine ausschließlich einen einzigen Vertikalantrieb umfasst. Wenn die Werkzeugmaschine mehrere Werkzeugaufnahmen umfasst, an denen jeweils ein Werkzeug anordenbar ist und die gemeinsam zum Bearbeiten des Werkstücks verfahrbar sind, erweist es sich als vorteilhaft, wenn die Werkzeugmaschine mindestens zwei Vertikalantriebe umfasst, durch die die Werkzeugaufnahme in vertikaler Richtung der Werkzeugmaschine verfahrbar ist und wenn das Erfassen der IST-Position der Werkzeugaufnahme in vertikaler Richtung durch die Steuereinheit aus Daten beider Vertikalantriebe und/oder durch das Sensormittel erfassbar ist.

Es sind Ausführungsformen des Verfahrens denkbar, bei denen die Werkzeugmaschine mit einer definierten maximalen Bearbeitungsgeschwindigkeit, bei der der Kraft- und/oder Beschleunigungsvorsteuerung-IST-Wert des Werkzeugs maximal ist, und/oder mit einer einstellbaren Bearbeitungsgeschwindigkeit, bei der der Kraft- und/oder Beschleunigungsvorsteuerungs-IST-Wert des Werkzeugs bezüglich des Werts bei maximaler Bearbeitungsgeschwindigkeit reduziert ist, betreibbar ist.

Wenn die Werkzeugmaschine mit einer definierten maximalen Bearbeitungsgeschwindigkeit, bei der der Kraft- und/oder Beschleunigungsvorsteuerung-IST-Wert des Werkzeugs maximal ist, betreibbar ist, sind Bearbeitungszeiten des Werkstücks minimal. Allerdings sind solchenfalls auch die auftretenden Winkelfehler maximal.

Wenn die Werkzeugmaschine mit einer einstellbaren Bearbeitungsgeschwindigkeit, bei der der Kraft- und/oder Beschleunigungsvorsteuerungs-IST-Wert des Werkzeugs bezüglich des Werts bei maximaler Bearbeitungsgeschwindigkeit reduziert ist, sind Bearbeitungszeiten des Werkstücks erhöht. Allerdings sind solchenfalls Winkelfehler reduzierbar.

Ausführungsformen des Verfahrens sind gekennzeichnet durch ein einmaliges oder periodisches Durchlaufen der Verfahrensschritte.

Darüber hinaus sind Ausführungsformen des Verfahrens denkbar, bei denen das Überführen der Werkzeugaufnahme von der IST-Position um den ermittelten Ausgleichswert auf die SOLL-Position sprunghaft oder kontinuierlich erfolgt.

Wenn das Überführen der Werkzeugaufnahme von der IST-Position um den ermittelten Ausgleichswert auf die SOLL-Position sprunghaft erfolgt, kann beispielsweise das Überführen der Werkzeugaufnahme von der IST-Position um den ermittelten Ausgleichswert auf die SOLL-Position erfolgen, wenn das Werkzeug von einer Einfahrbewegung in das Werkstück in eine Ausfahrbewegung aus dem Werkstück heraus umschaltet.

Wenn das Überführen der Werkzeugaufnahme von der IST-Position und der ermittelten Ausgleichswert auf die SOLL-Position kontinuierlich erfolgt, sind Trägheitseffekte beim Überführen reduzierbar.

Schließlich wird die Aufgabe gelöst durch eine Werkzeugmaschine mit mindestens einer Aufnahme für mindestens ein Werkstück, in der oder an der ein Werkstück festlegbar ist, mit mindestens einer Werkzeugaufnahme, in der oder an der ein Werkzeug, insbesondere ein Bohrer, festgelegt und durch einen Drehantrieb der Werkzeugaufnahme drehend antreibbar ist, mit mindestens einem Horizontalantrieb, durch den die Werkzeugaufnahmen zum Bearbeiten des Werkstücks zumindest in einer horizontalen Ebene der Werkzeugmaschine verfahrbar ist, mit mindestens einem Vertikalantrieb durch den die Werkzeugaufnahme in vertikaler Richtung der Werkzeugmaschine verfahrbar ist und mit mindestens einer Steuereinheit, der Drehantrieb, Horizontalantrieb und Vertikalantrieb funktional zugeordnet sind, wobei die Werkzeugmaschine eingerichtet ist, ein Verfahren zur dynamischen Kompensation von Winkelsfehlern nach einem der Ansprüche 1 bis 12

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Verfahrens und der Werkzeugmaschine.

In der Zeichnung zeigt:
- Figur 1: Eine schematische seitliche Schnittansicht eines Bereichs der Werkzeugmaschine;
- Figur 2: Ein schematisches Ablaufdiagramm eines erfindungsgemäßen Verfahrens.

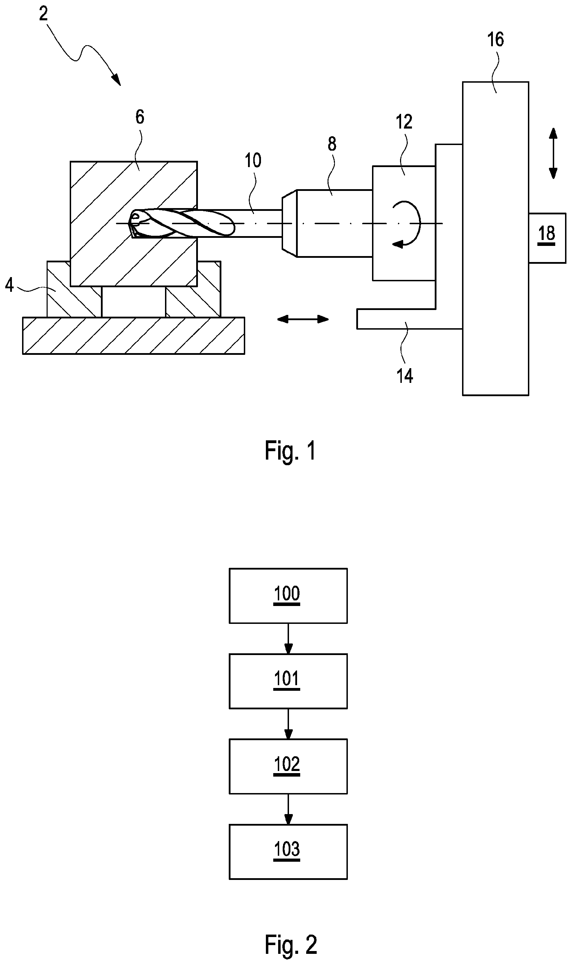

Figur 1 zeigt eine schematische Darstellung einer insgesamt mit dem Bezugszeichen 2 versehene Werkzeugmaschine (nur auszugsweise dargestellt). Diese umfasst eine Aufnahme 4 für ein Werkstück 6. An der Aufnahme 4 ist das Werkstück 6 festgelegt. Darüber hinaus umfasst die Werkzeugmaschine 2 eine Werkzeugaufnahme 8, in der oder an der ein Werkzeug 10, insbesondere ein Bohrer, festgelegt ist. Das Werkzeug 10 ist durch einen Drehantrieb 12 der Werkzeugaufnahme 8 drehend antreibbar.

Darüber hinaus umfasst die Werkzeugmaschine 2 einen horizontalen Antrieb 14, durch den die Werkzeugaufnahme 8 zum Bearbeiten des Werkstücks 6 zumindest in einer horizontalen Ebene der Werkzeugmaschine 2 verfahrbar ist. Ferner umfasst die Werkzeugmaschine 2 einen Vertikalantrieb 16, durch den die Werkzeugaufnahme 8 in vertikaler Richtung der Werkzeugmaschine 2 verfahrbar ist.

Schließlich umfasst die Werkzeugmaschine 2 eine Steuereinheit 18, der Drehantrieb 12, Horizontalantrieb 14 und Vertikalantrieb 16 funktional zugeordnet sind.

Unter Zuhilfenahme von Figur 1 wird nachfolgend das schematische Ablaufdiagramm gemäß Figur 2 beschrieben:
In einem ersten Schritt 100 wird mindestens ein drehend angetriebenes Werkzeug 10 zum Bearbeiten des Werkstücks 6 in das Werkstück 6 entlang einer in oder schräg zur horizontalen Ebene verlaufende Einfahrrichtung eingefahren.

Hierbei wird das Werkstück 6 durch das Werkzeug 10 spanend bearbeitet. Nach Bearbeiten des Werkstücks 6 wird in einem Schritt 101 das drehend angetriebene Werkzeug 10 aus dem Werkstück 6 entlang einer der Einfahrrichtung entgegengesetzten Ausfahrrichtung ausgefahren. Hierbei wird die IST-Position der Werkzeugaufnahme 8 in vertikaler Richtung erfasst und ein Kraft- und/oder Beschleunigungsvorsteuerungs-IST-Wert des Werkzeugs 10 bezüglich einer in der horizontalen Ebene verlaufenden Z-Achse erfasst.

In einem hieran anschließenden Schritt 102 wird ein Winkelfehler des Werkzeugs 10 in Abhängigkeit des Kraft- und/oder Beschleunigungsvorsteuerungs-IST-Werts des Werkzeugs 10 bezüglich der horizontalen Ebene verlaufende Z-Achse ermittelt.

In einem hieran anschließenden Schritt 103 wird ein Ausgleichswert der Werkzeugaufnahme 8 in vertikaler Richtung zum Ausgleich des ermittelten Winkelfehlers ermittelt und die Werkzeugaufnahme 8 von der IST-Position um den ermittelten Ausgleichswert auf eine SOLL-Position überführt.

### Bezugszeichenliste

- 2: Werkzeugmaschine
- 4: Aufnahme
- 6: Werkstück
- 8: Werkzeugaufnahme
- 10: Werkzeug
- 12: Drehantrieb
- 14: Horizontalantrieb
- 16: Vertikalantrieb
- 18: Steuereinheit

## Patentansprüche

1. Verfahren zur dynamischen Kompensation von Winkelfehlern beim Betreiben einer Werkzeugmaschine (2), die mindestens eine Aufnahme (4) für mindestens ein Werkstück (6), in der oder an der ein Werkstück (6) festlegbar ist, die mindestens eine Werkzeugaufnahme (8), in der oder an der ein Werkzeug (10), insbesondere ein Bohrer, festgelegt und durch einen Drehantrieb (12) der Werkzeugaufnahme (8) drehend antreibbar ist, die mindestens einen Horizontalantrieb (14), durch den die Werkzeugaufnahme (8) zum Bearbeiten des Werkstücks (6) zumindest in einer horizontalen Ebene der Werkzeugmaschine (2) verfahrbar ist, die mindestens einen Vertikalantrieb (16), durch den die Werkzeugaufnahme (8) in vertikaler Richtung der Werkzeugmaschine (2) verfahrbar ist und die mindestens eine Steuereinheit (18) umfasst, der Drehantrieb (12), Horizontalantrieb (14) und Vertikalantrieb (16) funktional zugeordnet sind, mit den Schritten:
a. Einfahren des mindestens einen drehend angetrieben Werkzeugs (10) zum Bearbeiten des Werkstücks (6) in das Werkstück (6) entlang einer in der oder schräg zur horizontalen Ebene verlaufenden Einfahrrichtung;
b. Ausfahren des drehend angetriebenen Werkzeugs (10) aus dem Werkstück (6) entlang einer der Einfahrrichtung entgegengesetzten Ausfahrrichtung und Erfassen einer IST-Position der Werkzeugaufnahme (8) in vertikaler Richtung und eines Kraft- und/oder Beschleunigungsvorsteuerungs-IST-Werts des Werkzeugs (10) bezüglich einer in der horizontalen Ebene verlaufenden Z-Achse;
c. Ermitteln eines Winkelfehlers des Werkzeugs (10) in Abhängigkeit des Kraft- und/oder Beschleunigungsvorsteuerungs-IST-Werts des Werkzeugs (10) bezüglich der in der horizontalen Ebene verlaufenden Z-Achse;
d. Ermitteln eines Ausgleichswerts der Werkzeugaufnahme (8) in vertikaler Richtung zum Ausgleich des ermittelten Winkelfehlers und Überführen der Werkzeugaufnahme (8) von der IST-Position um den ermittelten Ausgleichswert auf eine SOLL-Position.

2. Verfahren nach Anspruch 1, **dadurch gekennzeichnet, dass** die Steuereinheit (18) mindestens eine Speichereinheit umfasst, in der mindestens eine Tabelle, in der eine Mehrzahl von Tabellenwerten hinterlegbar sind, und/oder ein Rechenmodell, durch das die Tabellenwerte berechenbar sind, hinterlegt, hinterlegbar und abrufbar ist, wobei in der Tabelle bzw. durch das Rechenmodell einem Kraft- und/oder Beschleunigungsvorsteuerungs-IST-Wert des Werkzeugs (10) in Richtung der in der horizontalen Ebene verlaufenden Z-Achse ein Winkelfehler und/oder ein Ausgleichswert der Werkzeugaufnahme (8) in vertikaler Richtung zugeordnet ist.

3. Verfahren nach Anspruch 1 oder 2, **dadurch gekennzeichnet, dass** der Ausgleichswert eine Korrekturkurve oder eine Korrekturdatum der Werkzeugaufnahme (8) in vertikaler Richtung zum Ausgleich des ermittelten Winkelfehlers umfasst.

4. Verfahren nach einem der vorhergehenden Ansprüche, **dadurch gekennzeichnet, dass** der Kraft- und/oder Beschleunigungsvorsteuerungs-IST-Wert des Werkzeugs (10) in Richtung der in der horizontalen Ebene verlaufenden Z-Achse durch die Steuereinheit (18) aus Daten des Drehantriebs (12) und/oder durch ein Sensormittel erfassbar ist.

5. Verfahren nach einem der vorhergehenden Ansprüche, **dadurch gekennzeichnet, dass** die IST-Position der Werkzeugaufnahme (8) in vertikaler Richtung durch die Steuereinheit (18) aus Daten des Vertikalantriebs (16) und/oder durch ein Sensormittel erfassbar ist.

6. Verfahren nach Anspruch 4 oder 5, **dadurch gekennzeichnet, dass** das Ermitteln eines Winkelfehlers des Werkzeugs (10) in Abhängigkeit des Kraft- und/oder Beschleunigungsvorsteuerungs-IST-Werts des Werkzeugs (10) bezüglich der in der horizontalen Ebene verlaufenden Z-Achse durch das Rechenmodell oder durch das Sensormittel erfolgt.

7. Verfahren nach einem der Ansprüche 2 bis 6, **gekennzeichnet durch** ein Hinterlegen der Tabellenwerte in der Tabelle durch manuelle Eingabe, durch Durchlaufen eines Rechenmodells und/oder durch Erfassen eines bestimmten IST-Winkelfehlers bei einem bestimmten Kraft- und/oder Beschleunigungsvorsteuerungs-IST-Werts, wobei in der Tabelle zumindest einem Kraft- und/oder Beschleunigungsvorsteuerungs-IST-Wert des Werkzeugs in Richtung der in der horizontalen Ebene verlaufenden Z-Achse ein Winkelfehler und/oder ein Ausgleichswert der Werkzeugaufnahme (8) in vertikaler Richtung zugeordnet ist.

8. Verfahren nach einem der vorhergehenden Ansprüche **gekennzeichnet durch** ein Erfassen einer IST-Position des Werkzeugs (10) in der horizontalen Ebene.

9. Verfahren nach Anspruch 8, **dadurch gekennzeichnet, dass** das Ermitteln des Ausgleichswerts der Werkzeugaufnahme (8) in vertikaler Richtung zusätzlich in Abhängigkeit der erfassten IST-Position des Werkzeugs (10) in der horizontalen Ebene erfolgt.

10. Verfahren nach einem der vorhergehenden Ansprüche, **dadurch gekennzeichnet, dass** die Werkzeugmaschine (2) mindestens zwei Vertikalantriebe (16) umfasst, durch die die Werkzeugaufnahme (8) in vertikaler Richtung der Werkzeugmaschine (2) verfahrbar ist und dass das Erfassen der IST-Position der Werkzeugaufnahme (8) in vertikaler Richtung durch die Steuereinheit (18) aus Daten beider Vertikalantriebe (16) und/oder durch das Sensormittel erfassbar ist.

11. Verfahren nach einem der vorhergehenden Ansprüche, **dadurch gekennzeichnet, dass** die Werkzeugmaschine (2) mit einer definierten maximalen Bearbeitungsgeschwindigkeit, bei der der Kraft- und/oder Beschleunigungsvorsteuerung-IST-Wert des Werkzeugs (10) maximal ist, und/oder mit einer einstellbaren Bearbeitungsgeschwindigkeit, bei der der Kraft- und/oder Beschleunigungsvorsteuerungs-IST-Wert des Werkzeugs (10) bezüglich des Werts bei maximaler Bearbeitungsgeschwindigkeit reduziert ist, betreibbar ist.

12. Verfahren nach einem der vorhergehenden Ansprüche, **dadurch gekennzeichnet, dass** das Überführen der Werkzeugaufnahme (8) von der IST-Position um den ermittelten Ausgleichswert auf die SOLL-Position sprunghaft oder kontinuierlich erfolgt.

13. Werkzeugmaschine (2) mit mindestens einer Aufnahme (4) für mindestens ein Werkstück (6), in der oder an der ein Werkstück (6) festlegbar ist, mit mindestens einer Werkzeugaufnahme (8), in der oder an der ein Werkzeug (10), insbesondere ein Bohrer, festgelegt und durch einen Drehantrieb (12) der Werkzeugaufnahme (8) drehend antreibbar ist, mit mindestens einem Horizontalantrieb (14), durch den die Werkzeugaufnahmen (8) zum Bearbeiten des Werkstücks (6) zumindest in einer horizontalen Ebene der Werkzeugmaschine (2) verfahrbar ist, mit mindestens einem Vertikalantrieb (16) durch den die Werkzeugaufnahme (8) in vertikaler Richtung der Werkzeugmaschine (2) verfahrbar ist und mit mindestens einer Steuereinheit (18), der Drehantrieb (12), Horizontalantrieb (14) und Vertikalantrieb (16) funktional zugeordnet sind, wobei die Werkzeugmaschine (2) eingerichtet ist, ein Verfahren zur dynamischen Kompensation von Winkelfehlern nach einem der Ansprüche 1 bis 12 auszuführen.

## Claims

1. Method for the dynamic compensation of angular errors when operating a machine tool (2), wherein at least one holder (4) for at least one workpiece (6), in or on which a workpiece (6) can be fixed, wherein at least one tool holder (8), in or on which a tool (10), in particular a drill, is fixed and can be driven in rotation by a rotary drive (12) of the tool holder (8), wherein at least one horizontal drive (14), through which the tool holder (8) can be moved at least in a horizontal plane of the machine tool (2) for machining the workpiece (6), wherein at least one vertical drive (16), through which the tool holder (8) can be moved in the vertical direction of the machine tool (2) and which comprises at least one control unit (18), of which the rotary drive (12), horizontal drive (14) and vertical drive (16) are functionally assigned, with the steps:
a. Retracting the at least one rotatably driven tool (10) for machining the workpiece (6) in the workpiece (6) along a retraction direction running in or obliquely to the horizontal plane;
b. Extending the rotationally driven tool (10) from the workpiece (6) along an extension direction opposite to the retraction direction and detecting an ACTUAL position of the tool holder (8) in the vertical direction and a force and/or acceleration feedforward ACTUAL value of the tool (10) with regard to a Z axis extending in the horizontal plane;
c. Determining an angular error of the tool (10) as a function of the force and/or acceleration feedforward ACTUAL value of the tool (10) with respect to the Z axis extending in the horizontal plane;
d. Determining a compensation value of the tool holder (8) in the vertical direction to compensate for the determined angular error and transferring the tool holder (8) from the ACTUAL position by the determined compensation value to a TARGET position.

2. Method according to Claim 1, **characterised in that** the control unit (18) comprises at least one memory unit in which at least one table in which a plurality of table values can be stored, and/or a calculation model through which the table values can be calculated, are stored, are able to be stored and can be accessed, whereby in the table or by means of the calculation model an angular error and/or a compensation value of the tool holder (8) in the vertical direction is assigned to a force and/or acceleration pre-control ACTUAL value of the tool (10) in the direction of the Z axis running in the horizontal plane.

3. Method according to claim 1 or 2, **characterised in that** the compensation value comprises a correction curve or correction data of the tool holder (8) in the vertical direction to compensate for the determined angular error.

4. Method according to one of the preceding claims, **characterised in that** the ACTUAL force and/or acceleration pre-control value of the tool (10) in the direction of the Z axis running in the horizontal plane is determined by the control unit (18) from data from the rotary drive (12) and/or by a sensor.

5. Method according to one of the preceding claims, **characterised in that** the ACTUAL position of the tool holder (8) in the vertical direction can be detected by the control unit (18) from data of the vertical drive (16) and/or by a sensor.

6. Method according to claim 4 or 5, **characterised in that** the determination of an angular error of the tool (10) as a function of the ACTUAL force and/or acceleration pre-control value of the tool (10) with respect to the Z axis running in the horizontal plane is carried out by the calculation model or by the sensor.

7. Method according to one of claims 2 to 6, **characterised by** storing the table values in the table by manual entry, by running through a calculation model and/or by detecting a specific ACTUAL angle error at a specific force and/or acceleration pre-control ACTUAL value, whereby an angular error and/or a compensation value of the tool holder (8) in the vertical direction is associated in the table with at least one force and/or acceleration pre-control ACTUAL value of the tool in the direction of the Z axis extending in the horizontal plane.

8. Method according to one of the preceding claims, **characterised by** detecting an ACTUAL position of the tool (10) in the horizontal plane.

9. Method according to claim 8, **characterised in that** the determination of the compensation value of the tool holder (8) in the vertical direction additionally takes place as a function of the detected ACTUAL position of the tool (10) in the horizontal plane.

10. Method according to one of the preceding claims, **characterised in that** the machine tool (2) comprises at least two vertical drives (16), through which the tool holder (8) can be moved in the vertical direction of the machine tool (2) and that the ACTUAL position of the tool holder (8) in the vertical direction is detected by the control unit (18) from data from both vertical drives (16) and/or by the sensor means.

11. Method according to one of the preceding claims, **characterised in that** the machine tool (2) has a defined maximum processing speed at which the ACTUAL force and/or acceleration pre-control value of the tool (10) is maximum, and/or can be operated with an adjustable processing speed at which the ACTUAL force and/or acceleration pre-control value of the tool (10) is reduced with respect to the value at maximum processing speed.

12. Method according to one of the preceding claims, **characterised in that** the transfer of the tool holder (8) from the ACTUAL position by the determined compensation value to the target position occurs abruptly or continuously.

13. Machine tool (2) with at least one holder (4) for at least one workpiece (6), in or on which a workpiece (6) can be fixed, with at least one tool holder (8), in or on which a tool (10), in particular a drill, is fixed and can be driven in rotation by a rotary drive (12) of the tool holder (8), with at least one horizontal drive (14), through which the tool holders (8) can be moved for machining the workpiece (6) at least in a horizontal plane of the machine tool (2), with at least one vertical drive (16) through which the tool holder (8) can be moved in the vertical direction of the machine tool (2) and with at least one control unit (18), which is functionally assigned to the rotary drive (12), horizontal drive (14) and vertical drive (16), wherein the machine tool (2) is set up to carry out a method for dynamic compensation of angular errors according to one of Claims 1 to 12.

## Revendications

1. Procédé de compensation dynamique d'erreurs angulaires lors de l'utilisation d'une machine-outil (2), qui comprend au moins un logement (4) pour au moins une pièce à usiner (6), dans lequel ou sur lequel une pièce à usiner (6) peut être fixée, au moins un porte-outil (8), dans lequel ou sur lequel un outil (10), en particulier un foret, est fixé et peut être entraîné en rotation par un entraînement rotatif (12) du porte-outil (8), au moins un entraînement horizontal (14), par lequel le porte-outil (8) peut être déplacé pour usiner la pièce (6) au moins dans un plan horizontal de la machine-outil (2), qui comprend au moins un entraînement vertical (16) par lequel le porte-outil (8) peut être déplacé dans la direction verticale de la machine-outil (2) et qui comprend au moins une unité de commande (18) à laquelle l'entraînement rotatif (12), l'entraînement horizontal (14) et l'entraînement vertical (16) sont fonctionnellement associés, avec les étapes suivantes :
a. l'introduction d'au moins un outil (10) entraîné en rotation pour usiner la pièce à usiner (6) dans la pièce à usiner (6) le long d'une direction d'introduction s'étendant dans le plan horizontal ou en oblique par rapport à celui-ci ;
b. la sortie de l'outil (10) entraîné en rotation hors de la pièce à usiner (6) le long d'une direction de sortie opposée à la direction d'entrée, et la détection d'une position RÉELLE du porte-outil (8) dans la direction verticale et d'une valeur RÉELLE de précommande de force et/ou d'accélération de l'outil (10) par rapport à un axe Z s'étendant dans le plan horizontal ;
c. la détermination d'une erreur angulaire de l'outil (10) en fonction de la valeur RÉELLE de précommande de force et/ou d'accélération de l'outil (10) par rapport à l'axe Z s'étendant dans le plan horizontal ;
d. la détermination d'une valeur de compensation du porte-outil (8) dans la direction verticale pour compenser l'erreur angulaire déterminée et transférer le porte-outil (8) de la position RÉELLE à une position DE CONSIGNE de la valeur de compensation déterminée.

2. Procédé selon la revendication 1, **caractérisé en ce que** l'unité de commande (18) comprend au moins une unité de mémoire dans laquelle au moins un tableau, dans lequel une pluralité de valeurs de tableau peuvent être enregistrées, et/ou un modèle de calcul, par lequel les valeurs de tableau peuvent être calculées, sont enregistrées, peuvent être enregistrées et peuvent être appelées, une erreur angulaire et/ou une valeur de compensation du porte-outil (8) dans la direction verticale étant associées dans le tableau ou par le modèle de calcul à une valeur RÉELLE de précommande de force et/ou d'accélération de l'outil (10) dans la direction de l'axe Z s'étendant dans le plan horizontal.

3. Procédé selon la revendication 1 ou 2, **caractérisé en ce que** la valeur de compensation comprend une courbe de correction ou une donnée de correction du porte-outil (8) dans la direction verticale pour compenser l'erreur angulaire déterminée.

4. Procédé selon l'une des revendications précédentes, **caractérisé en ce que** la valeur RÉELLE de précommande de force et/ou d'accélération de l'outil (10) dans la direction de l'axe Z s'étendant dans le plan horizontal peut être détectée par l'unité de commande (18) à partir de données de l'entraînement rotatif (12) et/ou par un moyen de détection.

5. Procédé selon l'une des revendications précédentes, **caractérisé en ce que** la position RÉELLE du porte-outil (8) dans la direction verticale peut être détectée par l'unité de commande (18) à partir de données de l'entraînement vertical (16) et/ou par un moyen de détection.

6. Procédé selon la revendication 4 ou 5, **caractérisé en ce que** la détermination d'une erreur angulaire de l'outil (10) en fonction de la valeur RÉELLE de précommande de force et/ou d'accélération de l'outil (10) par rapport à l'axe Z s'étendant dans le plan horizontal est effectuée par le modèle de calcul ou par le moyen de détection.

7. Procédé selon l'une des revendications 2 à 6, **caractérisé par** un enregistrement des valeurs du tableau dans le tableau par saisie manuelle, par passage par un modèle de calcul et/ou par détection d'une erreur angulaire RÉELLE déterminée pour une valeur RÉELLE de précommande de force et/ou d'accélération déterminée, une erreur angulaire et/ou une valeur de compensation du porte-outil (8) dans la direction verticale étant associées dans le tableau à au moins une valeur RÉELLE de précommande de force et/ou d'accélération de l'outil dans la direction de l'axe Z s'étendant dans le plan horizontal.

8. Procédé selon l'une des revendications précédentes, **caractérisé par** une détection d'une position RÉELLE de l'outil (10) dans le plan horizontal.

9. Procédé selon la revendication 8, **caractérisé en ce que** la détermination de la valeur de compensation du porte-outil (8) dans la direction verticale s'effectue en outre en fonction de la position RÉELLE détectée de l'outil (10) dans le plan horizontal.

10. Procédé selon l'une des revendications précédentes, **caractérisé en ce que** la machine-outil (2) comprend au moins deux entraînements verticaux (16) par lesquels le porte-outil (8) peut être déplacé dans la direction verticale de la machine-outil (2) et **en ce que** la détection de la position RÉELLE du porte-outil (8) dans la direction verticale peut être détectée par l'unité de commande (18) à partir de données des deux entraînements verticaux (16) et/ou par le moyen de détection.

11. Procédé selon l'une des revendications précédentes, **caractérisé en ce que** la machine-outil (2) peut fonctionner à une vitesse d'usinage maximale définie à laquelle la valeur de RÉELLE de précommande de force et/ou d'accélération de l'outil (10) est maximale, et/ou à une vitesse d'usinage réglable à laquelle la valeur RÉELLE de précommande de force et/ou d'accélération de l'outil (10) est réduite par rapport à la valeur à la vitesse d'usinage maximale.

12. Procédé selon l'une des revendications précédentes, **caractérisé en ce que** le transfert du porte-outil (8) de la position RÉELLE à la position DE CONSIGNE de la valeur de compensation déterminée s'effectue par sauts ou en continu.

13. Machine-outil (2) avec au moins un logement (4) pour au moins une pièce à usiner (6), dans lequel ou sur lequel une pièce à usiner (6) peut être fixée, avec au moins un porte-outil (8), dans lequel ou sur lequel un outil (10), en particulier un foret, est fixé et peut être entraîné en rotation par un entraînement rotatif (12) du porte-outil (8), avec au moins un entraînement horizontal (14), par lequel le porte-outil (8) peut être déplacé pour l'usinage de la pièce à usiner (6) au moins dans un plan horizontal de la machine-outil (2), avec au moins un entraînement vertical (16) par lequel le porte-outil (8) peut être déplacé dans la direction verticale de la machine-outil (2) et avec au moins une unité de commande (18) à laquelle l'entraînement rotatif (12), l'entraînement horizontal (14) et l'entraînement vertical (16) sont fonctionnellement associés, la machine-outil (2) étant agencée pour mettre en oeuvre un procédé de compensation dynamique d'erreurs angulaires selon l'une des revendications 1 à 12.
